# EUROPEAN PATENT SPECIFICATION

(11) **EP 3 744 806 B1**
(45) Date of publication and mention of the grant of the patent: **30.07.2025**
(21) Application number: 19744329.4
(22) Date of filing: 18.01.2019
(51) Int. Cl.: C09K 3/00, B32B 27/00, C08J 5/18, C08K 3/10, C08L 83/04, C08L 83/05, C08L 83/07, C08L 83/14, C09D 7/63, C09D 183/05, C09D 183/07

(54) **SOLVENT-FREE SILICONE RELEASE COMPOSITION, RELEASE SHEET, AND METHOD FOR PRODUCING RELEASE SHEET**
LÖSUNGSMITTELFREIE SILIKONTRENNZUSAMMENSETZUNG, TRENNFOLIE UND VERFAHREN ZUR HERSTELLUNG EINER TRENNFOLIE
COMPOSITION ANTIADHÉSIVE À BASE DE SILICONE, EXEMPTE DE SOLVANT ET PROCÉDÉ DE PRODUCTION DE FEUILLE ANTIADHÉSIVE

(30) Priority: 25.01.2018 JP 2018010138
(43) Date of publication of application: 02.12.2020
(73) Proprietor: Shin-Etsu Chemical Co., Ltd., Tokyo 100-0004 (JP)
(72) Inventor: IHARA, Toshiaki, Annaka-shi, Gunma 379-0224 (JP); KOBAYASHI, Ataru, Annaka-shi, Gunma 379-0224 (JP)
(74) Representative: Mewburn Ellis LLP
(86) International application number: PCT/JP2019/001428
(87) International publication number: WO 2019/146518

(56) References cited:
- EP-A1- 3 309 220
- WO-A1-2006/070947
- WO-A1-2015/198827
- WO-A1-2015/198828
- WO-A1-2016/006252
- JP-A- 2002 356 667
- JP-A- 2003 128 925
- JP-A- 2005 343 974
- JP-A- 2005 343 974
- JP-A- 2006 290 919
- JP-A- 2009 292 883
- JP-A- 2010 502 778
- JP-A- 2010 535 862
- JP-A- 2011 132 524
- JP-A- 2012 224 780
- JP-A- 2017 002 195
- JP-A- H08 217 980
- US-A1- 2017 218 133

## Description

### TECHNICAL FIELD

This invention relates to solventless silicone release compositions, release sheets comprising a cured film of the composition, and a method for preparing the release sheet. In the manufacture of a release sheet, such as release paper or release film, by the high-speed roll coating of a silicone release composition onto a sheet-like substrate such as paper or plastic sheet and curing the composition at high temperature, the composition is characterized by a reduced amount of mist generation and reduced surface roughness (or surface asperities) of a cured silicone coating. In the subsequent steps of coating a pressure-sensitive adhesive (PSA) onto the cured silicone coating and heat curing the adhesive, the composition is characterized by a release force which is not so tight because the adhesive is not anchored in the surface asperities on the cured silicone coating, that is, a low release force is inherent to the cured silicone coating.

### BACKGROUND ART

In the prior art approach for preventing adhesion or bonding between sheet-like substrates such as paper and plastic sheets and pressure-sensitive adhesives, a cured film of an organopolysiloxane composition is disposed on the substrate surface to impart release properties. The following methods are known for forming a cured organopolysiloxane film on the substrate surface.
(1) A method for forming a releasable film by addition reaction between an alkenyl-containing organopolysiloxane and an organohydrogenpolysiloxane in the presence of a platinum base compound catalyst (Patent Documents 1, 4, 5 and 6).
(2) A method for forming a releasable film by condensation reaction of an organopolysiloxane having a functionality such as hydroxyl or alkoxy in the presence of an organometallic salt catalyst (Patent Document 2).
(3) A method for forming a releasable film by effecting radical polymerization of an acrylic group-containing organopolysiloxane using a photoinitiator and UV or electron beam (Patent Document 3).

Among the above methods (1), (2) and (3), method (1) for forming a releasable film through addition reaction is widely utilized because it can accommodate a variety of requisite release properties covering from low-speed release to high-speed release.

Method (1) for forming a releasable film through addition reaction includes a solvent type in which an organopolysiloxane composition is dissolved in an organic solvent, an emulsion type in which an organopolysiloxane composition is dispersed in water using an emulsifier, and a solventless type using just organopolysiloxane. Since the solvent type is harmful to the human body and environment, a switchover from the solvent type to the solventless type is in progress in view of safety. The emulsion type needs enormous energy for removal of water and it is difficult to reduce the release force because a noticeable amount of emulsifier is left behind.

For this reason, the solventless type is most often used. As a basic formulation, a solventless type composition is composed of a base oil (vinyl-containing siloxane), a crosslinker (SiH-containing siloxane), an inhibitor (acetylene compound), and a platinum catalyst.

When products (i.e. release papers or release films) are obtained by coating and curing a solventless type organopolysiloxane release paper composition, the smoothness of the cured organopolysiloxane composition layer on their surface significantly affects the release force. If the surface has asperities or variations of coating weight, a pressure-sensitive adhesive (PSA) is caught in asperities which serve as anchors, indicating an increase of release force. Fine asperities on the surface are formed during high-speed coating as a result of waving of the organopolysiloxane composition on the roll surface or mist generation from the roll surface. Although the cause of mist generation is not well understood, the mist consists of scattered particles of the organopolysiloxane composition. Mist generation is observable even with the naked eye as coating speed is increased to 250 m/min or higher. As the coating speed increases, the amount of mist generated increases. The organopolysiloxane composition flies off from the roll surface as a mist. As the amount of generated mist increases, more asperities are formed on the surface, leading to a higher release force.

Recently efforts have been made to accelerate the coating speed of organopolysiloxane compositions for the purposes of increasing the productivity and reducing the fabrication cost of release papers or release films. Specifically, although the prior art sets the peripheral velocity of a coating roll in the range of 100 to 200 m/min, there are found many attempts to conduct the step of coating an organopolysiloxane composition at a higher speed by increasing the peripheral velocity to 250 m/min or higher. However, when the coating speed exceeds 250 m/min, the organopolysiloxane composition generates a large volume of mist, which is never encountered at a low coating speed. With the mist generation, the organopolysiloxane composition coating becomes roughened on its surface and the adhesive is caught or anchored in asperities on the surface of the cured composition layer. As a result, release forces at low and high speeds are increased.

In order to mitigate surface asperities, the amount of mist generation must be reduced.

Heretofore, a relationship between the amount of generated mist and the surface properties or release force of the completed release sheet (release paper or release film) has not been reported.

### PRIOR ART DOCUMENTS

### PATENT DOCUMENTS

Patent Document 1: JP-A S47-032072
Patent Document 2: JP-B S35-013709
Patent Document 3: JP-A S54-162787
Patent Document 4: JP 2005343974 A
Patent Document 5: WO 2016199557 A1
Patent Document 6: US 2017218133 A1

### SUMMARY OF THE INVENTION

### TECHNICAL PROBLEM

An object of the invention, which has been made under the above-mentioned circumstances, is to provide a solventless silicone release composition, a release sheet comprising a cured film of the composition, and a method for preparing the release sheet, the composition being effective, when a release sheet such as release paper or release film is produced by coating the composition at a high speed of at least 250 m/min, for eliminating surface roughness formed by high-speed rotation of a roll and preventing formation of surface asperities by mist generation, and being able to form a release sheet which exhibits a low release force inherent to cured silicone after PSA is attached to the sheet.

### SOLUTION TO THE PROBLEM

Making extensive investigations to attain the above object, the inventors have found that a solventless silicone release composition comprising specific amounts of the following components is effective for eliminating any surface roughness formed due to high-speed rotation of a roll and preventing formation of surface asperities by mist generation during high-speed coating to a sheet-like substrate, and useful in preparing a release sheet which includes a cured silicone film having satisfactory smoothness on its surface and which exhibits a reduced high-speed release force relative to a PSA-coated substrate,
(A) an alkenyl-containing organopolysiloxane containing at least two alkenyl groups per molecule and having a vinyl value of 0.016 mol/100 g to 0.7 mol/100 g and a kinematic viscosity at 25°C of 80 mm²/s to 500 mm²/s, represented by the general formula (1):

   M_{α}M^{vi}_{β}D_{γ}D^{vi}_{δ}T_{ε}T^{vi}_{ζ}Q_{η} (1)

   wherein M is R₃SiO_{1/2}, M^{vi} is R₂PSiO_{1/2}, D is R₂SiO_{2/2}, D^{vi} is RPSiO_{2/2}, T is RSiO_{3/2}, T^{vi} is PSiO_{3/2}, Q is SiO_{4/2}, R is each independently a C₁-C₁₂ substituted or unsubstituted monovalent hydrocarbon group free of aliphatic unsaturation, P is an alkenyl group of the formula: -(CH₂)ₐ-CH=CH₂ wherein a is an integer of 0 to 6, α, β, δ and ζ are each independently an integer of at least 0, not all β, δ and ζ are 0 at the same time, 2 ≤ β+δ+ζ ≤ 50, γ is an integer of 10 to 300, ε is an integer of 0 to 20, and η is an integer of 0 to 10,
(B) an organohydrogenpolysiloxane containing at least two silicon-bonded hydrogen atoms per molecule and having a kinematic viscosity at 25°C of 2 mm²/s to 500 mm²/s,
(C) a platinum group metal base catalyst, and
(E) an organopolysiloxane containing a crosslinked structure and having fluidity. The invention is predicated on this finding.

As used herein, the term "high-speed release force" means a release force required for peeling a PSA tape at a speed of at least 250 m/min, preferably at least 300 m/min from a release sheet such as release paper or release film.

Accordingly, the invention provides a solventless silicone release composition, release sheet, and release sheet preparation method, as defined in the claims.

### ADVANTAGEOUS EFFECTS OF THE INVENTION

The solventless silicone release composition is effective, when coated onto a sheet-like substrate at a high speed and cured, for eliminating any surface roughness brought by high-speed rotation of a roll, because of its low viscosity. Also, formation of fine asperities on the surface is minimized because component (E) mitigates mist generation. The composition is thus useful in preparing release sheets such as release paper or release film which includes the cured silicone film having satisfactory smoothness on its surface and which is low in high-speed release force relative to a PSA-coated substrate.

### DESCRIPTION OF EMBODIMENTS

Now the invention is described in detail.

### Component (A)

Component (A) is an alkenyl-containing organopolysiloxane containing at least two, preferably 2 to 50 alkenyl groups per molecule and having a vinyl value of 0.016 mol/100 g to 0.7 mol/100 g and a kinematic viscosity at 25°C of 80 mm²/s to 500 mm²/s, represented by the general formula (1).

M_{α}M^{vi}_{β}D_{γ}D^{vi}_{δ}T_{ε}T^{vi}_{ζ}Q_{η} (1)

Herein M is R₃SiO_{1/2}, M^{vi} is R₂PSiO_{1/2}, D is R₂SiO_{2/2}, D^{vi} is RPSiO_{2/2}, T is RSiO_{3/2}, T^{vi} is PSiO_{3/2}, Q is SiO_{4/2}, R is each independently a C₁-C₁₂ substituted or unsubstituted monovalent hydrocarbon group free of aliphatic unsaturation, P is an alkenyl group of the formula: -(CH₂)ₐ-CH=CH₂ wherein "a" is an integer of 0 to 6, α, β, δ and ζ are each independently an integer of at least 0, not all β, δ and ζ are 0 at the same time, 2 ≤ β+δ+ζ ≤ 50, γ is an integer of 10 to 300, ε is an integer of 0 to 20, and η is an integer of 0 to 10.

In formula (1), R is each independently a substituted or unsubstituted monovalent hydrocarbon group of 1 to 12 carbon atoms, preferably 1 to 10 carbon atoms, more preferably 1 to 8 carbon atoms, free of aliphatic unsaturation. Examples include alkyl groups such as methyl, ethyl, propyl, butyl and octyl, cycloalkyl groups such as cyclohexyl, aryl groups such as phenyl and tolyl, aralkyl groups such as benzyl and phenethyl, and substituted forms of the foregoing in which some or all hydrogen atoms are substituted by halogen atoms, typically halogenated alkyl groups such as chloropropyl and trifluoropropyl. Preferably methyl accounts for at least 80 mol% of R in view of curability of the composition and a low release force of the cured product.

P is an alkenyl group of the formula: -(CH₂)ₐ-CH=CH₂ wherein "a" is an integer of 0 to 6, examples of which include vinyl, allyl, butenyl, propenyl, 5-hexenyl, octenyl, and decenyl, with vinyl being preferred.

In formula (1), α, β, δ and ζ are each independently an integer of at least 0, not all β, δ and ζ are equal to 0 at the same time, β+δ+ζ is an integer of 2 to 50, preferably an integer of 2 to 20, α is preferably an integer of 0 to 10, β is preferably an integer of 0 to 10, δ is preferably an integer of 0 to 50, and ζ is preferably an integer of 0 to 10.

In formula (1), γ indicative of the number of D units (R₂SiO structure) is an integer of 10 to 300, preferably an integer of 10 to 200, more preferably an integer of 10 to 180, and most preferably an integer of 50 to 150. If γ is less than 10, a more amount of mist is generated so that the surface of the silicone release composition coating is roughened. If γ exceeds 300, the organopolysiloxane and hence, the solventless silicone release composition has too high a kinematic viscosity and becomes inefficient to coat so that the coating is aggravated in smoothness and largely varies in coating weight locally.

In formula (1), ε is an integer of 0 to 20, preferably an integer of 0 to 10, and η is an integer of 0 to 10, preferably an integer of 0 to 5.

Component (A) should have a vinyl value of 0.016 mol/100 g to 0.7 mol/100 g, preferably 0.016 mol/100 g to 0.6 mol/100 g, and more preferably 0.016 mol/100 g to 0.5 mol/100 g. A vinyl value of less than 0.016 mol/100 g means that in formula (1), the degree of polymerization (DOP) of D, T, and Q units free of vinyl is greater than the DOP of vinyl-containing units. Since ε indicative of the DOP of T units is 0 to 20 and η indicative of the DOP of Q units is 0 to 10, the structure of formula (1) having a low vinyl value becomes a structure with less vinyl groups and more D units. Extremely stated, the structure having a vinyl value of less than 0.016 mol/100 g is a structure of formula (1) wherein the number of vinyl groups is 2 and all α, δ, ε, ζ and η are 0, that is, M^{vi}₂D_{γ} wherein the value of γ is at least 166.4, which empirically has a kinematic viscosity of at least 500 mm²/s. Therefore, if the vinyl value is less than 0.016 mol/100 g, component (A) becomes least wettable and spreadable over the substrate to be coated and varies in coating weight on the substrate, like the situation (described below) wherein component (A) has a kinematic viscosity at 25°C in excess of 500 mm²/s. Also, if the vinyl value is in excess of 0.7 mol/100 g, the crosslinking density becomes too high and the low-speed release force (i.e. release force required for peeling at 0.3 m/min) becomes high.

Component (A) should have a kinematic viscosity at 25°C of 80 mm²/s to 500 mm²/s, preferably 100 mm²/s to 450 mm²/s. If the kinematic viscosity is less than 80 mm²/s, component (A) becomes excessively wettable and spreadable, resulting in a shortage of coating weight on the substrate. If the kinematic viscosity is more than 500 mm²/s, inversely component (A) becomes less wettable and spreadable and varies in coating weight on the substrate. It is noted that the kinematic viscosity can be measured by an Ostwald viscometer (the same holds true, hereinafter).

Illustrative examples of the organopolysiloxane as component (A) include both end alkenyl-containing siloxanes, side chain alkenyl-containing siloxanes, one end and side chain alkenyl-containing siloxanes, both end and side chain alkenyl-containing siloxanes, and branched end alkenyl-containing siloxanes.

Examples as expressed by structural formula include M^{vi}₂D_{γ}, M₂D_{γ}D^{vi}_{δ}, M^{vi}₃D_{γ}T₁, M^{vi}₄D_{γ}T₂, M^{vi}₂D_{γ}D^{vi}_{δ}, M^{vi}₂D_{γ}Q₁, and M_{α}D_{γ}D^{vi}_{δ}T^{vi}_{ζ} wherein M, M^{vi}, D, D^{vi}, T, T^{vi}, Q, γ, δ, and ζ are as defined above (the same hereinafter). Illustrative structures include M^{vi}₂D₁₀₀, M₂D₉₇D^{vi}₃, M₂D₂₆D^{vi}₄, M₂D₉₆D^{vi}₄, M₂D₉₅D^{vi}₅, M^{vi}₃D₁₀₀T₁, M^{vi}₄D₁₀₀T₂, M^{vi}₂D₉₇D^{vi}₁, M^{vi}₂D₉₅D^{vi}₃, and M₃D₉₃D^{vi}₃T^{vi}₁.

### Component (B)

Component (B) is an organohydrogenpolysiloxane containing at least two silicon-bonded hydrogen atoms per molecule and having a kinematic viscosity at 25°C of 2 mm²/s to 500 mm²/s.

The organohydrogenpolysiloxane as component (B) should have at least two, preferably 3 to 100, more preferably 10 to 100 silicon-bonded hydrogen atoms (SiH groups). An addition reaction takes place between SiH groups in the organohydrogenpolysiloxane and vinyl groups in the organopolysiloxane having formula (1) to form a crosslinked organopolysiloxane.

The content of SiH groups in component (B) is preferably 0.016 to 3.5 mol/100 g, more preferably 0.024 to 2.5 mol/100 g, and even more preferably 0.024 to 2.0 mol/100 g. A too low content of SiH groups may adversely affect curability and adhesion whereas a too high content may cause a tightening of release force.

Component (B) should have a kinematic viscosity at 25°C of 2 mm²/s to 500 mm²/s, preferably 2 mm²/s to 300 mm²/s, more preferably 5 mm²/s to 200 mm²/s. If the kinematic viscosity is lower than 2 mm²/s, the substrate adhesion is noticeably aggravated although the reactivity is high because of the low molecular weight. If the viscosity is higher than 500 mm²/s, the reactivity is aggravated or the curability is lost, from which a drop of residual adhesion rate and an increase of release force due to short cure are observable.

The organohydrogenpolysiloxane as component (B) preferably has a structure of the general formula (4).

M_{o'}M^{H}_{π'}D_{ρ'}D^{H}_{σ'}T_{τ'}T^{H}_{ϕ'}Q_{χ'} (4)

Herein M is R₃SiO_{1/2}, M^{H} is R₂HSiO_{1/2}, D is R₂SiO_{2/2}, D^{H} is RHSiO_{2/2}, T is RSiO_{3/2}, T^{H} is HSiO_{3/2}, Q is SiO_{4/2}, R is each independently a C₁-C₁₂ substituted or unsubstituted monovalent hydrocarbon group free of aliphatic unsaturation, o', π', ρ' and τ' are each independently an integer of at least 0, σ' is an integer of 0 to 100, ϕ' is an integer of 0 to 10, χ' is an integer of 0 to 10, not all π', σ' and ϕ' are 0 at the same time, and 2 ≤ π'+σ'+ϕ' ≤ 100.

In formula (4), examples of R are as exemplified above for R in formula (1), with C₁-C₈ alkyl groups being preferred.

In formula (4), o', π', ρ' and τ' are each independently an integer of at least 0, o' is preferably an integer of 0 to 10, π' is preferably an integer of 0 to 10, ρ' is preferably an integer of 0 to 100, τ' is preferably an integer of 0 to 10. Also, σ' is an integer of 0 to 100, preferably an integer of 2 to 100, and more preferably an integer of 10 to 80, ϕ' is an integer of 0 to 10, preferably an integer of 0 to 5, χ' is an integer of 0 to 10, preferably an integer of 0 to 5, not all π', σ' and ϕ' are equal to 0 at the same time, π'+σ'+ϕ' is an integer of 2 to 100, preferably an integer of 10 to 80, and σ': ρ' is preferably from 100:0 to 30:70.

The organohydrogenpolysiloxane preferably has a weight average molecular weight of 194 to 10,000, more preferably 874 to 5,000. If Mw is too low, the substrate adhesion may be largely aggravated. If Mw is too high, the reactivity is aggravated or the curability is lost, from which a drop of residual adhesion rate and an increase of release force due to short cure are observable. As used herein, the weight average molecular weight (Mw) is measured by gel permeation chromatography (GPC) versus polystyrene standards (the same holds true, hereinafter).

Illustrative examples of the organohydrogenpolysiloxane as component (B) include both end hydrogensilyl-containing siloxanes, side chain hydrogensilyl-containing siloxanes, one end and side chain hydrogensilyl-containing siloxanes, and both end and side chain hydrogensilyl-containing siloxanes.

Examples expressed by structural formula include M^{H}₂D_{ρ'}, M₂D^{H}_{σ'}, M₂D_{ρ'}D^{H}_{σ'}, M^{H}₂D_{ρ'}D^{H}_{σ'}, M^{H}₃D_{ρ'}T₁, M^{H}₄D_{ρ'}T₂, and M_{o'}D_{ρ'}D^{H}_{σ'}T^{H}_{ϕ'} wherein M, M^{H}, D, D^{H}, T, T^{H}, o', ρ', σ', and ϕ' are as defined above (the same hereinafter). Illustrative structures include M^{H}₂D₁₀, M^{H}₂D₁₀₀, M^{H}₃D₁₀₀T₁, M^{H}₄D₁₀₀T₂, M₂D₃D^{H}₂₇, M₂D₅D^{H}₄₅, M₂D₃D^{H}₉₇, M₂D₅₀D^{H}₅₀, M₂D₇₀D^{H}₃₀, and M₃D₁₀D^{H}₇₀T₁.

Component (B) may be used alone or in admixture of two or more.

Component (B) is used in an amount to give 1 to 5 moles, preferably 1.2 to 3 moles of silicon-bonded hydrogen atoms (SiH groups) per mole of alkenyl groups in component (A). The amount corresponds to a SiH functionality content of 0.016 to 3.5 mol/100 g. A less amount of component (B) is insufficient for cure and adhesion. If the amount of component (B) is too large, the amount of residual SiH increases to tighten the release force, but the release force declines with time as the SiH amount decreases with time.

### (C) Platinum group metal base catalyst

Component (C) is a platinum group metal base catalyst which may be selected from well-known addition reaction catalysts. Suitable platinum group metal base catalysts include, for example, platinum, palladium, rhodium and ruthenium base catalysts, with the platinum base catalysts being preferred. Examples of the platinum base catalyst include chloroplatinic acid, alcohol or aldehyde solutions of chloroplatinic acid, and complexes of chloroplatinic acid with various olefins or vinylsiloxanes.

The platinum group metal based catalyst is added in a catalytic or effective amount, preferably in such an amount as to give 10 to 1,000 ppm, more preferably 10 to 200 ppm of platinum group metal based on the total weight of components (A), (B), (D) and (E).

### (D) Addition reaction inhibitor

Component (D) is an addition reaction inhibitor, which is optional and serves to control the catalytic activity of the platinum group metal base catalyst. Included are organonitrogen compounds, organophosphorus compounds, acetylene compounds, oxime compounds, and organic chlorine compounds. Examples include acetylene alcohols such as 1-ethynyl-1-cyclohexanol, 3-methyl-1-butyn-3-ol, 3,5-dimethyl-1-hexyn-3-ol, 3-methyl-1-pentyn-3-ol, and phenylbutynol, acetylene compounds such as 3-methyl-3-penten-1-yne and 3,5-dimethyl-3-hexene-1-yne, the reaction products of acetylene compounds with alkoxysilanes, siloxanes or hydrogensilanes, e.g. 1,1-dimethylpropynyloxytrimethylsilane, vinylsiloxanes such as cyclic tetramethylvinylsiloxane, organonitrogen compounds such as benzotriazole, organophosphorus compounds, oxime compounds, maleic acid compounds, and organic chlorine compounds.

When used, the addition reaction inhibitor (D) is blended in an amount sufficient to provide satisfactory stability to a processing bath and typically 0.01 to 5 parts by weight, preferably 0.1 to 3 parts by weight per 100 parts by weight of component (A).

### (E) Organopolysiloxane containing crosslinked structure and having fluidity

Component (E) is an organopolysiloxane containing a crosslinked structure and having fluidity. It is effective as a mist suppressant when added.

The crosslinked structure indicates the addition reaction product of a vinyl-containing organopolysiloxane and an organohydrogenpolysiloxane or the condensation reaction product of a hydroxyl-containing organopolysiloxane and an alkoxy-containing organopolysiloxane, but also encompasses organopolysiloxanes containing R₃SiO_{1/2} units (M units), R₂SiO_{2/2} units (D units), RSiO_{3/2} units (T units), and optionally SiO_{4/2} units (Q units) in the molecule wherein R is as defined above. Since organopolysiloxanes containing too much T or D units become gel or resinous, oily organopolysiloxanes are preferred because of release paper and release film applications.

The organopolysiloxane as component (E) has fluidity. The organopolysiloxane after solvent removal preferably has an absolute viscosity at 25°C of 1,000 to 500,000,000 mPa·s, more preferably 1,000 to 100,000 mPa·s. If the absolute viscosity is too low, the release force may be increased. If the absolute viscosity is too high, the organopolysiloxane may be difficult to disperse in the silicone release composition. As used herein, the absolute viscosity may be measured by a rotational viscometer.

Examples of the organopolysiloxane (E) containing a crosslinked structure and having fluidity include organopolysiloxanes obtained from addition reaction of an organopolysiloxane having a structure of the following average compositional formula (2) and an organohydrogenpolysiloxane having a structure of the following average compositional formula (3) in the presence of a platinum base catalyst. These organopolysiloxanes contain a crosslinked structure and flow well. M_{θ}M^{vi}

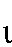 D_{κ}D^{vi}_{λ}TµT^{vi}_{ν}Q_{ξ} (2)

MₒM^{H}_{π}D_{ρ}D^{H}_{σ}T_{τ}T^{H}_{ϕ}Q_{χ} (3)

Herein M is R₃SiO_{1/2}, M^{vi} is R₂PSiO_{1/2}, M^{H} is R₂HSiO_{1/2}, D is R₂SiO_{2/2}, D^{vi} is RPSiO_{2/2}, D^{H} is RHSiO_{2/2}, T is RSiO_{3/2}, T^{vi} is PSiO_{3/2}, T^{H} is HSiO_{3/2}, Q is SiO_{4/2}, R is each independently a C₁-C₁₂ substituted or unsubstituted monovalent hydrocarbon group free of aliphatic unsaturation, P is an alkenyl group of the formula: -(CH₂)ₐ-CH=CH₂ wherein a is an integer of 0 to 6, θ, 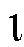 , κ, λ, µ, o, π, ·ρ, σ, and τ are each independently 0 or a positive number, ν is 0 or a positive number of up to 20, ϕ is 0 or a positive number of up to 20, ξ is 0 or a positive number of up to 5, χ is 0 or a positive number of up to 5, not all 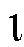 , λ and v are 0 at the same time, not all π, σ and ϕ are 0 at the same time, 2 ≤ 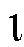 +λ+v ≤ 100, 2 ≤ π+σ+ϕ ≤ 100, and not both 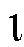 +λ+ν and π+σ+ϕ are 2 at the same time.

The structural formulae (2) and (3) also imply average compositional formulae.

In formulae (2) and (3), examples of R and P are as exemplified above for R and P in formula (1), respectively. Among others, R is preferably selected from hydrocarbon groups of 1 to 10 carbon atoms, more preferably 1 to 8 carbon atoms, specifically alkyl groups such as methyl, ethyl, and propyl and aryl groups such as phenyl and tolyl. P is preferably selected from vinyl, allyl, butenyl, and propenyl.

In formulae (2) and (3), θ, 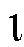 , κ, λ, µ, o, π, ρ, σ, and τ are each independently 0 or a positive number, θ is preferably 0 or a positive number of 1 to 10, 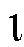 is preferably 0 or a positive number of 1 to 10, κ is preferably a positive number of 10 to 500, λ is preferably 0 or a positive number of 1 to 100, µ is preferably 0 or a positive number of 1 to 10, o is preferably 0 or a positive number of 1 to 10, π is preferably 0 or a positive number of 1 to 10, ρ is preferably 0 or a positive number of 1 to 100, σ is preferably 0 or a positive number of 1 to 100, τ is preferably 0 or a positive number of 1 to 10, v is 0 or a positive number of 1 to 20, preferably 0 or a positive number of 1 to 10, ϕ is 0 or a positive number of 1 to 20, preferably 0 or a positive number of 1 to 10, ξ is 0 or a positive number of 1 to 5, preferably 0 or a positive number of 1 to 2, χ is 0 or a positive number of 1 to 5, preferably 0 or a positive number of 1 to 2, not all 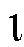 , λ and v are equal to 0 at the same time, not all π, σ and ϕ are equal to 0 at the same time, 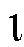 +λ+ν is a positive number of 2 to 100, preferably a positive number of 2 to 80, π+σ+ϕ is a positive number of 2 to 100, preferably a positive number of 2 to 80, and not both 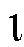 +λ+ν and π+σ+ϕ are equal to 2 at the same time.

The organopolysiloxane of formula (2) preferably has a vinyl content in the range of 0.005 to 0.23 mol/100 g, more preferably 0.006 to 0.05 mol/100 g.

Also the organopolysiloxane of formula (2) preferably has a Mw in the range of 900 to 37,000, more preferably 3,800 to 29,500.

Illustrative examples of the organopolysiloxane of formula (2) include both-end alkenyl-containing siloxanes, side chain alkenyl-containing siloxanes, one-end and side chain alkenyl-containing siloxanes, both-end and side chain alkenyl-containing siloxanes, and branch-end alkenyl-containing siloxanes.

Examples as expressed by structural formula include M^{vi}₂D_{κ}, M₂D_{κ}D^{vi}_{λ}, M^{vi}₃D_{κ}T₁, M^{vi}₄D_{κ}T₂, M^{vi}₂D_{κ}D^{vi}_{λ}, M^{vi}₂DκQ₁, and M_{θ}D_{κ}D^{vi}_{λ}T^{vi}ᵥ wherein M, M^{vi}, D, D^{vi}, T, T^{vi}, Q, θ, κ, λ, and v are as defined above (same hereinafter). Illustrative structures include M^{vi}₂D₁₀₀, M₂D₉₇D^{vi}₃, M₂D₂₆D^{vi}₄, M₂D₉₆D^{vi}₄, M₂D₉₅D^{vi}₅, M^{vi}₃D₁₀₀T₁, M^{vi}₄D₁₀₀T₂, M^{vi}₂D₉₇D^{vi}₁, M^{vi}₂D₉₅D^{vi}₃, and M₃D₉₃D^{vi}₃T^{vi}₁.

The organohydrogenpolysiloxane of formula (3) preferably has a SiH content in the range of 0.005 to 0.700 mol/100 g, more preferably 0.008 to 0.500 mol/100 g.

Also the organohydrogenpolysiloxane of formula (3) preferably has a Mw in the range of 142 to 20,000.

Illustrative examples of the organohydrogenpolysiloxane of formula (3) include both end hydrogensilyl-containing siloxanes, side chain hydrogensilyl-containing siloxanes, one end and side chain hydrogensilyl-containing siloxanes, and both end and side chain hydrogensilyl-containing siloxanes.

Examples as expressed by structural formula include M^{H}₂D_{ρ}, M₂D^{H}_{σ}, M₂D_{ρ}D^{H}_{σ}, M^{H}₂D_{ρ}D^{H}_{σ}, M^{H}₃D_{ρ}T₁, M^{H}₄D_{ρ}T₂, and MₒD_{ρ}D^{H}_{σ}T^{H}_{ϕ} wherein M, M^{H}, D, D^{H}, T, T^{H}, o, ρ, σ, and ϕ are as defined above (same hereinafter). Illustrative structures include M^{H}₂D₁₀, M^{H}₂D₁₀₀, M₂D₂₇D^{H}₃, M₂D₉₇D^{H}₃, M₂D₂₆D^{H}₄, M₂D₂₅D^{H}₅, M₂D₂₄D^{H}₆, M₂D₉₆D^{H}₄, M₂D₉₅D^{H}₅, M^{H}₃D₁₀₀T₁, M^{H}₄D₁₀₀T₂, M^{H}₂D₉₇D^{H}₁, M^{H}₂D₉₅D^{H}₃, and M₃D₉₃D^{H}₃T^{H}₁.

For reaction, the organopolysiloxane of formula (2) and the organohydrogenpolysiloxane of formula (3) are preferably used in such a proportion as to give 0.8 to 2.0 moles, more preferably 0.9 to 1.2 moles of alkenyl groups in the organopolysiloxane of formula (2) per mole of SiH groups in the organohydrogenpolysiloxane of formula (3).

Suitable platinum base catalysts used in the addition reaction between the organopolysiloxane of formula (2) and the organohydrogenpolysiloxane of formula (3) include chloroplatinic acid, alcohol or aldehyde solutions of chloroplatinic acid, and complexes of chloroplatinic acid with various olefins or vinylsiloxanes.

The platinum base catalyst is added in a catalytic or effective amount. Specifically, it is preferably used in an amount to give 10 to 1,000 ppm, more preferably 10 to 200 ppm of platinum group metal based on the total weight of the organopolysiloxane of formula (2) and the organohydrogenpolysiloxane of formula (3).

A solvent may be used in the addition reaction. Suitable solvents used herein include organic solvents compatible with organopolysiloxanes (exclusive of siloxane solvents) such as toluene, hexane, xylene, and methyl ethyl ketone, and organopolysiloxanes (i.e. siloxane solvents), for example, low viscosity cyclic siloxanes such as octamethyltetrasiloxane and decamethylpentasiloxane, linear siloxanes such as M₂Dₙ wherein M and D are as defined above and n is an integer of 0 to 200, preferably 1 to 50, and branched siloxanes such as M₂₊ₘDₙTₘ wherein M, D, and T are as defined above, n is an integer of 0 to 200, preferably an integer of 1 to 50, and m is an integer of 1 to 10, preferably an integer of 1 to 3.

The amount of the solvent used is preferably 8 to 50 times, more preferably 8 to 20 times the total weight of the organopolysiloxane of formula (2) and the organohydrogenpolysiloxane of formula (3).

For the addition reaction between the organopolysiloxane of formula (2) and the organohydrogenpolysiloxane of formula (3), preferred reaction conditions include a temperature of 40 to 150°C, especially 50 to 140°C and a time of 0.5 to 6 hours, especially 1 to 5 hours.

The thus obtained organopolysiloxane of crosslinked structure preferably contains 0.1 to 100 moles, more preferably 0.1 to 50 moles of crosslinked structure (silalkylene bonds such as silethylene bonds) per 1,000 moles of siloxane units, as computed from ¹H-NMR analysis.

When the synthesis is carried out in an organic solvent such as toluene, the preferred procedure includes adding a low-viscosity organopolysiloxane as a solvent to the reaction mixture and heating the reaction mixture under reduced pressure to distill off the organic solvent, yielding an organopolysiloxane mixture devoid of the organic solvent.

The reduced pressure is preferably 0.01 to 50 mmHg, more preferably 0.1 to 30 mmHg. The heating conditions are preferably at 50°C to 160°C for 30 minutes to 5 hours, more preferably at 60°C to 150°C for 30 minutes to 3 hours.

The low-viscosity organopolysiloxane is preferably used as a solvent in such an amount that it may account for 10 to 99% by weight, more preferably 20 to 95% by weight of the organopolysiloxane mixture.

Illustrative structures of component (E) are given below, but not limited thereto.

A crosslinked product formed by mixing M^{Vi}₂D₁₀₀ and M₂D₉₇D^{H}₃ in a Vi/H ratio of 1.05 and heating for reaction in the presence of an addition reaction catalyst such as a platinum base catalyst.

A crosslinked product formed by mixing M^{Vi}₃D₁₀₀T₁ and MH₂D₁₀₀ in a Vi/H ratio of 1.05 and heating for reaction in the presence of an addition reaction catalyst such as a platinum base catalyst.

A crosslinked product formed by mixing M^{Vi}₂D₉₇D^{Vi}₁ and M^{H}₂M₄D₁₀₀Q₂ in a Vi/H ratio of 1.05 and heating for reaction in the presence of an addition reaction catalyst such as a platinum base catalyst.

A crosslinked product formed by mixing M^{Vi}₃M₃D₃₀₀Q₃ and M^{H}₂D₁₀₀ in a Vi/H ratio of 1.05 and heating for reaction in the presence of an addition reaction catalyst such as a platinum base catalyst.

Also useful as the organopolysiloxane containing a crosslinked structure and having fluidity are the condensation reaction products of a hydroxyl-containing organopolysiloxane with an alkoxysilane, alkoxy-containing organopolysiloxane or methylhydrogenorganopolysiloxane. The condensation reaction products preferably contain T units or RSiO_{3/2} units wherein R is as defined above.

Illustrative structures are given below. Notably, M^{OH} is (HO)RSiO_{1/2}, M^{OCH3} is (CH₃O)R₂SiO_{1/2}, and R is as defined above.

A crosslinked product formed by mixing M^{OH}₂D₁₀₀ and CH₃Si(OCH₃)₃ or a partial hydrolytic condensate thereof in a OH/OCH₃ ratio of 1.05 and heating for condensation in the presence of a condensation reaction catalyst such as an organotin catalyst.

A crosslinked product formed by mixing M^{OH}₂D₁₀₀ and M^{OCH3}₃D₁₀₀T₁ in a OH/OCH₃ ratio of 1.05 and heating for reaction in the presence of an organotin catalyst.

The organopolysiloxane containing a crosslinked structure and having fluidity as component (E) is added in an amount of 0.1 to 10 parts by weight, preferably 0.1 to 5 parts by weight, and more preferably 0.1 to 3 parts by weight per 100 parts by weight of component (A). If the amount of component (E) is too small, the release force may be tight. If the amount is too large, the silicone release composition may become less curable.

### (F) High-molecular-weight linear organopolysiloxane

Component (F) is a high-molecular-weight linear organopolysiloxane for the purpose of imparting slippage, which has the general formula (5).

M¹₂D_{Ψ} (5)

Herein M¹ is R¹₃SiO_{1/2}, D is R₂SiO_{2/2}, R is as defined above, R¹ is a C₁-C₁₂ substituted or unsubstituted monovalent hydrocarbon group free of aliphatic unsaturation or a hydroxyl group, and Ψ is a positive number of 300 to 3,000. Component (F) enables to form a surface having a low coefficient of friction despite a low content of migration component because component (F) is kept entangled in a coating having a moderate crosslinking density.

In formula (5), examples of R are as exemplified above for R in formula (1), with C₁-C₈ alkyl groups being preferred. R¹ is a C₁-C₁₂ substituted or unsubstituted monovalent hydrocarbon group free of aliphatic unsaturation or a hydroxyl group. Examples of the C₁-C₁₂ substituted or unsubstituted monovalent hydrocarbon group free of aliphatic unsaturation are as exemplified above for R in formula (1). R¹ is preferably a C₁-C₈ alkyl group or hydroxyl group.

In formula (5), Ψ is a positive number of 300 to 3,000, preferably 500 to 2,500. A compound of formula (5) wherein Ψ is less than 300 tends to be a migration component because of a low molecular weight, so that the residual adhesion rate is aggravated or reduced, and a label peeled from the release sheet (release paper or release film) may be reduced in adhesive force. Inversely, a compound of formula (5) wherein Ψ exceeds 3,000 has so high a viscosity that it takes a time until the compound is dissolved in components (A), (B), (D) and (E), and the final composition obtained by mixing them has so high a viscosity that the coating weight may vary locally and high-speed coating may be accompanied by a large volume of mist.

Illustrative structures of component (F) include M¹₂D₃₀₀, M¹₂D₅₀₀, M¹₂D₁₀₀₀, M¹₂D₂₀₀₀, and M¹₂D₃₀₀₀.

Component (F) is blended in an amount of 0.1 to 10 parts by weight, preferably 0.5 to 5 parts by weight per 100 parts by weight of component (A).

### Optional components

While the solventless silicone release composition of the invention is obtained by mixing the predetermined amounts of the foregoing components (A), (B), (C), (E) and (F), any optional components may be added thereto if necessary as long as the objects and benefits of the invention are not impaired. Any well-known additives which are commonly used in silicone release compositions may be added in standard amounts. Although the solventless silicone release composition of the invention is designed as a solventless system in consideration of safety to the environment, its characteristics are not degraded even when it is diluted with an organic solvent.

As the optional component, the foregoing component (D), aryl-containing silicone resins, silicone resins, silica, and low-molecular-weight organopolysiloxanes having neither silicon-bonded hydrogen nor alkenyl for the purpose of adjusting release force, and the like may be added if necessary. The amounts of optional components may be standard amounts not to interfere with the benefits of the invention.

### Preparation

The solventless silicone release composition of the invention is prepared, preferably by premixing the foregoing components (A), (B), (F), (E) and optional components until uniform, and adding component (C) to the premix. Each component may be used alone or in admixture of two or more species.

The resulting solventless silicone release composition preferably has a kinematic viscosity at 25°C of up to 500 mm²/s, more preferably 80 to 450 mm²/s, and even more preferably 100 to 450 mm²/s. If the kinematic viscosity is too low, the coating weight may be reduced. If the kinematic viscosity is too high, the coating weight may vary or a large volume of mist may be generated.

### Application and usage

The solventless silicone release composition thus prepared is coated onto a sheet-like substrate such as paper or plastic film by means of a coating roll or the like, and heat cured in a standard way. The sheet-like substrate having a cured silicone film of the solventless silicone release composition disposed on one side is advantageously used as a release sheet. Exemplary plastic films include polyethylene, polypropylene, and polyethylene terephthalate.

When applied by a coating roll, the solventless silicone release composition is effective for reducing the amount of mist generated even at a peripheral velocity of at least 250 m/min, specifically 300 to 700 m/min.

The solventless silicone release composition is uniformly coated onto the surface of a sheet-like substrate and heat cured. The coating weight of the solventless silicone release composition may be sufficient to form a cured silicone film on the substrate surface and is, for example, about 0.1 to 5.0 g/m². A too much coating weight may rather invite a decline of release properties. The heat curing conditions may be selected from the range of about 100°C and about 60 seconds to about 200°C and about 2 seconds although the temperature varies with the type of substrate and coating weight.

In a preferred embodiment of the release paper prepared as above, after the release paper having the cured silicone film is let float on a 5% by weight aqueous solution of brilliant green dye such that one surface of the cured silicone film is immersed in the solution for 1 minute, and the one surface of the cured silicone film is washed with water, the cured silicone film shows no penetration of the dye from the one surface immersed in the dye solution to the opposite surface.

In the release paper prepared as above, the difference between maximum and minimum values of coating weight (cured silicone film weight) is preferably up to 0.1 g/m², more preferably 0.01 to 0.09 g/m² as measured by X-ray fluorescence analysis.

### EXAMPLES

Synthesis Examples, Examples, Reference Examples and Comparative Examples are given below for further illustrating the invention. It is noted that the kinematic viscosity is measured at 25°C by an Ostwald viscometer and the absolute viscosity is measured by a rotational viscometer.

The silicone release compositions were evaluated for release force, residual adhesion rate, amount of generated mist, coating, and coating weight variation by the following methods. All silicone release compositions were cured without raising any problems.

### Release force

The silicone release composition was coated onto the top rubber roller of three rollers of a Misting Tester (Toyo Seiki Seisaku-sho, Ltd). The rollers were rotated at a peripheral velocity of 330 m/min for 10 seconds to perform high-speed coating, then stopped, and after a glassine paper was immediately inserted between the top rubber roller and the middle metal roller, rotated again at a low speed to transfer the silicone release composition from the rubber roller to the glassine paper. The coating weight of the silicone release composition on the glassine paper was 1.2 g/m². The glassine paper having the silicone release composition transferred thereon was heated in a hot-air dryer at 140°C for 30 seconds, completing a release paper having a cured silicone film with a coating weight of 1.2 g/m². The release paper in this state was aged at 25°C for one day, after which an emulsion type acrylic adhesive (BPW-6111A by Toyo Ink Co., Ltd.) as a pressure-sensitive adhesive was coated onto the cured silicone film surface (i.e. surface of the silicone transferred from the rubber roller) of the release paper and dried at 100°C for 180 seconds. Next, a woodfree paper sheet was attached to the PSA surface, which was cut to a size of 5 cm × 18 cm and press bonded by rolling back and forth a roller of 2 kg, obtaining a sample. The sample was aged at 25°C for 20-24 hours. Thereafter, an end portion of the sample was detached, and the end of the PSA-coated woodfree paper sheet was pulled back at an angle of 180° relative to the glassine paper as the substrate and a peeling speed of 0.3 m/min, during which a force (N/50 mm) required for peeling was measured by a tensile tester (model AGS-50G by Shimadzu Corp.) and reported as a release force.

### Residual adhesion rate

As in the release force test, a release or parting paper was prepared by forming a cured silicone film in a coating weight of 1.2 g/m² on a glassine paper. The release paper was aged at 25°C for one day. A polyester pressure-sensitive adhesive (PSA) tape No. 31B (by Nitto Denko Corp., referred to as 31B tape, hereinafter) was attached to the cured silicone film surface of the release paper and press bonded under a pressure of 20 g/cm² for 20 hours in a dryer at 70°C. Then the 31B tape was peeled, and attached to a stainless steel (SUS304) plate. The assembly was pressed by rolling back and forth a roller of 2 kg, and allowed to stand for 30 minutes. Thereafter, an end portion of the 31B tape was detached and the end of the tape was pulled back at an angle of 180° relative to the SUS304 plate and a peeling speed of 0.3 m/min, during which a force (N/25 mm) required for peeling was measured and reported as release force A.

As a blank, a 31B tape was attached to a Teflon^{®} plate and press bonded under a pressure of 20 g/cm² for 20 hours in a dryer at 70°C as described above. Then the 31B tape was peeled, and attached to a SUS304 plate. The assembly was pressed by rolling back and forth a roller of 2 kg, and allowed to stand for 30 minutes. An end portion of the 31B tape was detached and the end of the tape was pulled back at an angle of 180° relative to the SUS304 plate and a peeling speed of 0.3 m/min, during which a force (N/25 mm) required for peeling was measured and reported as release force B.

A residual adhesion rate (%) was determined by computing (A/B)× 100.

### Amount of mist generated

An amount of generated mist was determined by coating 1.6 g of the silicone release composition onto the top roller of a Misting Tester (Toyo Seiki Seisaku-sho, Ltd), rotating three rollers at 1,400 rpm (330 m/min), and measuring the amount of generated mist by a Dust Trak Aerosol Monitor Model 8520 (TSI Inc.). One opening of a vinyl tube having an inner diameter of 7 mm was placed 15 cm straight above the top roller while the other opening was connected to the suction port of the Dust Trak. While mist amount measurement was continued for 60 seconds, the maximum value was recorded.

### Coating

For inspection of asperities on surface, a release paper was prepared by forming a cured silicone film in a coating weight of 1.2 g/m² on the surface of a glassine paper as in the release force test. The release paper was let float on the surface of a 5% by weight aqueous solution of brilliant green (C₂₇H₃₄O₄S) dye such that only the surface of the silicone transferred to the glassine paper from the rubber roller (i.e. surface of the cured silicone film) was immersed in the solution for 1 minutes. The surface of the cured silicone film which had been immersed in the dye solution was washed with water. Coating was rated according to the following criteria by the degree of penetration of the dye to the back surface of the film. Thin areas of the cured silicone film are susceptible to chipping, which evidences the penetration of the dye.
○ : no penetration of dye
×: penetration of dye

### Coating weight variation

Using a X-ray fluorescence spectrometer ZSX Primus II (Rigaku Corp.), a sample having the silicone release composition coated thereon was quantitatively determined for elemental silicon content. Measurement was made at 10 points on the coating surface, from which the difference between maximum and minimum values was computed.

### Reference Example 1

A silicone release composition was prepared by combining 100 parts by weight of methylvinylpolysiloxane (1) as component (A), 1.77 parts by weight of methylhydrogenpolysiloxane (6) as component (B), 0.27 part by weight of 1-ethynyl-1-cyclohexanol and 0.19 part by weight of 1,1-dimethylpropynyloxytrimethylsilane as addition reaction inhibitor component (D), and 2 parts by weight of mist suppressant 1 or organopolysiloxane containing a crosslinked structure and having fluidity in Synthesis Example 1 below as component (E) and stirring them until uniform. A platinum-vinylsiloxane complex as addition reaction catalyst (C) was added to the mixture in such an amount as to give 100 ppm of platinum atom based on the total weight of components (A), (B), (D), and (E), which were stirred until uniform. The resulting silicone release composition had a kinematic viscosity of 403 mm²/s and a H/Vi ratio (i.e. ratio of SiH groups to alkenyl groups in the composition) of 1.67.

### Example 2

A silicone release composition was prepared by combining 100 parts by weight of methylvinylpolysiloxane (2) as component (A), 3.09 parts by weight of methylhydrogenpolysiloxane (6) as component (B), 0.30 part by weight of 1-ethynyl-1-cyclohexanol as addition reaction inhibitor component (D), 2 parts by weight of mist suppressant 1 or organopolysiloxane containing a crosslinked structure and having fluidity in Synthesis Example 1 below as component (E), and 1.5 parts by weight of high-molecular-weight linear organopolysiloxane (8) as component (F) and stirring them until uniform. A platinum-vinylsiloxane complex as addition reaction catalyst (C) was added to the mixture in such an amount as to give 100 ppm of platinum atom based on the total weight of components (A), (B), (D), (E), and (F), which were stirred until uniform. The resulting silicone release composition had a kinematic viscosity of 117 mm²/s and H/Vi=1.70.

### Example 3

A silicone release composition was prepared by combining 100 parts by weight of methylvinylpolysiloxane (3) as component (A), 4.48 parts by weight of methylhydrogenpolysiloxane (6) and 1.24 parts by weight of methylhydrogenpolysiloxane (7) as component (B), 0.25 part by weight of 1-ethynyl-1-cyclohexanol and 0.25 part by weight of 1,1-dimethylpropynyloxytrimethylsilane as addition reaction inhibitor component (D), 2 parts by weight of mist suppressant 1 or organopolysiloxane containing a crosslinked structure and having fluidity in Synthesis Example 1 below as component (E), and 3.0 parts by weight of high-molecular-weight linear organopolysiloxane (9) as component (F), and stirring them until uniform. A platinum-vinylsiloxane complex as addition reaction catalyst (C) was added to the mixture in such an amount as to give 100 ppm of platinum atom based on the total weight of components (A), (B), (D), (E), and (F), which were stirred until uniform. The resulting silicone release composition had a kinematic viscosity of 364 mm²/s and H/Vi=1.70.

### Reference Example 4

A silicone release composition was prepared by combining 100 parts by weight of methylvinylpolysiloxane (4) as component (A), 2.23 parts by weight of methylhydrogenpolysiloxane (6) as component (B), 0.27 part by weight of 1-ethynyl-1-cyclohexanol and 0.19 part by weight of 1,1-dimethylpropynyloxytrimethylsilane as addition reaction inhibitor component (D), and 2 parts by weight of mist suppressant 1 or organopolysiloxane containing a crosslinked structure and having fluidity in Synthesis Example 1 below as component (E), and stirring them until uniform. A platinum-vinylsiloxane complex as addition reaction catalyst (C) was added to the mixture in such an amount as to give 100 ppm of platinum atom based on the total weight of components (A), (B), (D), and (E), which were stirred until uniform. The resulting silicone release composition had a kinematic viscosity of 267 mm²/s and H/Vi=1.80.

### Reference Example 5

A silicone release composition was prepared by combining 100 parts by weight of methylvinylpolysiloxane (1) as component (A), 1.77 parts by weight of methylhydrogenpolysiloxane (6) as component (B), 0.27 part by weight of 1-ethynyl-1-cyclohexanol and 0.19 part by weight of 1,1-dimethylpropynyloxytrimethylsilane as addition reaction inhibitor component (D), and 2 parts by weight of mist suppressant 2 or organopolysiloxane containing a crosslinked structure and having fluidity in Synthesis Example 2 below as component (E), and stirring them until uniform. A platinum-vinylsiloxane complex as addition reaction catalyst (C) was added to the mixture in such an amount as to give 100 ppm of platinum atom based on the total weight of components (A), (B), (D), and (E), which were stirred until uniform. The resulting silicone release composition had a kinematic viscosity of 406 mm²/s and H/Vi=1.67.

### Comparative Example 1

A silicone release composition was prepared by combining 100 parts by weight of methylvinylpolysiloxane (1) as component (A), 1.77 parts by weight of methylhydrogenpolysiloxane (6) as component (B), and 0.27 part by weight of 1-ethynyl-1-cyclohexanol and 0.19 part by weight of 1,1-dimethylpropynyloxytrimethylsilane as addition reaction inhibitor component (D), and stirring them until uniform. A platinum-vinylsiloxane complex as addition reaction catalyst (C) was added to the mixture in such an amount as to give 100 ppm of platinum atom based on the total weight of components (A), (B), and (D), which were stirred until uniform. The resulting silicone release composition had a kinematic viscosity of 405 mm²/s and H/Vi=1.67.

### Comparative Example 2

A silicone release composition was prepared by combining 100 parts by weight of methylvinylpolysiloxane (2) as component (A), 3.09 parts by weight of methylhydrogenpolysiloxane (6) as component (B), 0.3 part by weight of 1-ethynyl-1-cyclohexanol as addition reaction inhibitor component (D), and 1.5 parts by weight of high-molecular-weight linear organopolysiloxane (8) as component (F), and stirring them until uniform. A platinum-vinylsiloxane complex as addition reaction catalyst (C) was added to the mixture in such an amount as to give 100 ppm of platinum atom based on the total weight of components (A), (B), (D) and (F), which were stirred until uniform. The resulting silicone release composition had a kinematic viscosity of 120 mm²/s and H/Vi=1.70.

### Comparative Example 3

A silicone release composition was prepared by combining 100 parts by weight of methylvinylpolysiloxane (3) as component (A), 4.48 parts by weight of methylhydrogenpolysiloxane (6) and 1.24 parts by weight of methylhydrogenpolysiloxane (7) as component (B), 0.25 part by weight of 1-ethynyl-1-cyclohexanol and 0.25 part by weight of 1,1-dimethylpropynyloxytrimethylsilane as addition reaction inhibitor component (D), and 3.0 parts by weight of high-molecular-weight linear organopolysiloxane (9) as component (F), and stirring them until uniform. A platinum-vinylsiloxane complex as addition reaction catalyst (C) was added to the mixture in such an amount as to give 100 ppm of platinum atom based on the total weight of components (A), (B), (D), and (F), which were stirred until uniform. The resulting silicone release composition had a kinematic viscosity of 368 mm²/s and H/Vi=1.70.

### Comparative Example 4

A silicone release composition was prepared by combining 100 parts by weight of methylvinylpolysiloxane (5) as component (A), 1.70 parts by weight of methylhydrogenpolysiloxane (6) as component (B), 0.3 part by weight of 1-ethynyl-1-cyclohexanol as addition reaction inhibitor component (D), 2 parts by weight of mist suppressant 1 or organopolysiloxane containing a crosslinked structure and having fluidity in Synthesis Example 1 below as component (E), and 1.5 parts by weight of high-molecular-weight linear organopolysiloxane (8) as component (F), and stirring them until uniform. A platinum-vinylsiloxane complex as addition reaction catalyst (C) was added to the mixture in such an amount as to give 100 ppm of platinum atom based on the total weight of components (A), (B), (D), (E), and (F), which were stirred until uniform. The resulting silicone release composition had a kinematic viscosity of 685 mm²/s and H/Vi=1.88.

### --Ingredients used herein--

### Methylvinylpolysiloxane (1)

A polysiloxane blocked with dimethylvinylsiloxy at both molecular ends, consisting of (CH₃)₂SiO units except both ends, having vinyl value 0.017 mol/100 g and kinematic viscosity 440 mm²/s

{(CH₂=CH)(CH₃)₂SiO_{1/2}}₂{(CH₃)₂SiO}₁₅₅

### Methylvinylpolysiloxane (2)

A polysiloxane blocked with dimethylvinylsiloxy at both molecular ends, consisting of (CH₃)₂SiO units except both ends, having vinyl value 0.029 mol/100 g and kinematic viscosity 120 mm²/s

{(CH₂=CH)(CH₃)₂SiO_{1/2}}₂{(CH₃)₂SiO}₉₀

### Methylvinylpolysiloxane (3)

A polysiloxane blocked with trimethylsiloxy at the molecular ends, based on a siloxane chain consisting of (CH₃)(CH₂=CH)SiO units and (CH₃)₂SiO units, and having vinyl value 0.05 mol/100 g and kinematic viscosity 260 mm²/s

{(CH₃)₃SiO_{1/2}}₂{(CH₃)₂SiO}₁₀₀{(CH₂=CH)(CH₃)SiO}₄

### Methylvinylpolysiloxane (4)

A branched polysiloxane blocked with dimethylvinylsiloxy at three ends of the molecular chain, having vinyl value 0.0198 mol/100 g and kinematic viscosity 290 mm²/s

{(CH₂=CH)(CH₃)₂SiO_{1/2}}₃{(CH₃)₂SiO}₂₀₀{(CH₃)SiO_{3/2}}₁

### Methylvinylpolysiloxane (5)

A polysiloxane blocked with dimethylvinylsiloxy at molecular ends, having vinyl value 0.0145 mol/100 g and kinematic viscosity 600 mm²/s

{(CH₂=CH)(CH₃)₂SiO_{1/2}}₂{(CH₃)₂SiO}₁₈₄

### Methylhydrogenpolysiloxane (6)

A methylhydrogenpolysiloxane blocked with trimethylsiloxy at both molecular ends, consisting of (CH₃)HSiO units except both ends, having SiH content 1.60 mol/100 g and kinematic viscosity 35 mm²/s

{(CH₃)₃SiO_{1/2}}₂{(CH₃)(H)SiO}₇₀

### Methylhydrogenpolysiloxane (7)

A methylhydrogenpolysiloxane blocked with trimethylsiloxy at both molecular ends, based on a siloxane chain consisting of (CH₃)HSiO units and (CH₃)₂SiO units in a ratio ((CH₃)HSiO units/(CH₃)₂SiO units) of 2.5/1, having SiH content 1.08 mol/100 g and kinematic viscosity 35 mm²/s

{(CH₃)₃SiO_{1/2}}₂{(CH₃)₂SiO}₂₀{(CH₃)(H)SiO}₅₀

### Synthesis Example 1

### Organopolysiloxane containing crosslinked structure and having fluidity (mist suppressant 1)

10 g of a side chain methylhydrogenpolysiloxane of the formula: {(CH₃)₃SiO_{1/2}}₂{(CH₃)₂SiO}_{24.6}{(CH₃)HSiO}₂ and 48 g of a branched vinylmethylpolysiloxane of the formula: {(CH₂=CH)(CH₃)₂SiO_{1/2}}_{2.4}{(CH₃)₂SiO}_{147.7}{(CH₃)SiO_{3/2}}_{0.4} were mixed (SiH : vinyl = 1 mol : 1.083 mol) in 812 g of toluene (corresponding to 14 times the total weight of the side chain methylhydrogenpolysiloxane and the branched vinylmethylpolysiloxane). A vinylmethylpolysiloxane-coordinated platinum base catalyst was added in an amount to give 2 ppm of platinum based on the total weight of the reaction system. The system was heated and reaction was performed at a temperature of 80°C for 5 hours. The reaction product took the form of a toluene solution having an absolute viscosity of 4.0 mPa·s and had an absolute viscosity of 15,900 mPa·s after removal of toluene. It had 11.1 mol of silethylene bonds per 1,000 mol of siloxane units as computed from ¹H-NMR data. To the reaction product was added 696 g of a dimethylpolysiloxane of the formula: {(CH₃)₃SiO_{1/2}}₂{(CH₃)₂SiO}₂₇. Under nitrogen bubbling, this was subjected to vacuum distillation under 10 mmHg or below at 150°C for 3 hours, yielding a siloxane mixture, which (100 wt%) consisted of 92.3 wt% of dimethylpolysiloxane and 7.7 wt% of the reaction product (i.e. organopolysiloxane containing crosslinked structure and having fluidity) and had a kinematic viscosity of 43 mm²/s.

### Synthesis Example 2

### Organopolysiloxane containing crosslinked structure and having fluidity (mist suppressant 2)

16 g of a both end hydroxyl-containing dimethylpolysiloxane of the formula: {(HO)(CH₃)₂SiO_{1/2}}₂{(CH₃)₂SiO}₄₀ and 44 g of a branched methoxymethylpolysiloxane of the formula: {(CH₃O)(CH₃)₂SiO_{1/2}}_{2.4}{(CH₃)₂SiO}_{147.7}{(CH₃)SiO_{3/2}}_{0.4} were mixed (SiOH : SiOCH₃ = 1.08 mol : 1 mol) in 840 g of toluene (corresponding to 14 times the total weight of the both end hydroxyl-containing polysiloxane and the branched methoxymethylpolysiloxane). A dioctyltin dicarboxylate (i.e. dioctyltin dineodecanoate) was added in an amount to give 3 wt% of tin based on the total weight of the siloxanes. The system was heated and reaction was performed at a temperature of 80°C for 3 hours. The reaction product took the form of a toluene solution having an absolute viscosity of 6.0 mPa·s and had an absolute viscosity of 45,000 mPa·s after removal of toluene. To the reaction product was added 720 g of a dimethylpolysiloxane of the formula: {(CH₃)₃SiO_{1/2}}₂{(CH₃)₂SiO}₂₇. Under nitrogen bubbling, this was subjected to vacuum distillation under 10 mmHg or below at 150°C for 3 hours, yielding a siloxane mixture, which (100 wt%) consisted of 92.3 wt% of dimethylpolysiloxane and 7.7 wt% of the reaction product (i.e. organopolysiloxane containing crosslinked structure and having fluidity) and had a kinematic viscosity of 75 mm²/s.
High-molecular-weight linear organopolysiloxane (8)

   {HO(CH₃)₂SiO_{1/2}}₂{(CH₃)₂SiO_{2/2})}₁₆₀₀
High-molecular-weight linear organopolysiloxane (9)

   {HO(CH₃)₂SiO_{1/2}}₂{(CH₃)₂SiO_{2/2})}₂₀₀₀

The silicone release compositions of Examples, Reference Examples and Comparative Examples were evaluated for the aforementioned properties, with the results shown in Tables 1 and 2.

**Table 1**

| Component | | Ingredient (amount: pbw) | Examples and Reference Examples | | | | |
|---|---|---|---|---|---|---|---|
| | | | 1* | 2** | 3** | 4* | 5* |
| (A) | | Methylvinylpolysiloxane (1) | 100 | - | - | - | 100 |
| | | Methylvinylpolysiloxane (2) | - | 100 | - | - | - |
| | | Methylvinylpolysiloxane (3) | - | - | 100 | - | - |
| | | Methylvinylpolysiloxane (4) | - | - | - | 100 | - |
| (B) | | Methylhydrogenpolysiloxane (6) | 1.77 | 3.09 | 4.48 | 2.23 | 1.77 |
| | | Methylhydrogenpolysiloxane (7) | - | - | 1.24 | - | - |
| (C) | | Platinum-vinylsiloxane complex | 2 | 2 | 2 | 2 | 2 |
| (D) | | 1-Ethynyl-1-cyclohexanol | 0.27 | 0.30 | 0.25 | 0.27 | 0.27 |
| | | 1,1-Dimethylpropynyloxytrimethylsilane | 0.19 | - | 0.25 | 0.19 | 0.19 |
| (E) | | Siloxane mixture (Synthesis Example 1) | 2 | 2 | 2 | 2 | - |
| | | Siloxane mixture (Synthesis Example 2) | - | - | - | - | 2 |
| (F) | | High-molecular-weight linear organopolysiloxane (8) | - | 1.5 | - | - | - |
| | | High-molecular-weight linear organopolysiloxane (9) | - | - | 3.0 | - | - |

| Physical properties | | | | | | | |
|---|---|---|---|---|---|---|---|
| | H/Vi | | 1.67 | 1.70 | 1.70 | 1.80 | 1.67 |
| | Kinematic viscosity of silicone release composition (mm²/s) | | 403 | 117 | 364 | 267 | 406 |

| Release properties | | | | | | | |
|---|---|---|---|---|---|---|---|
| | Release force (N/50 mm) at 0.3 m/min | | 0.12 | 0.14 | 0.15 | 0.15 | 0.14 |
| | Residual adhesion rate (%) | | 98 | 95 | 94 | 99 | 96 |
| | Maximum amount of mist generated for 60 sec (mg/m³) | | 40 | 67 | 62 | 66 | 48 |
| | Coating | | ○ | ○ | ○ | ○ | ○ |
| | Coating weight variation (g/m²) | | 0.08 | 0.03 | 0.04 | 0.03 | 0.09 |

| | | | | | | | |
|---|---|---|---|---|---|---|---|
| * Reference Examples 1, 4 and 5, which are not part of the present invention. ** Examples 2 and 3 of the present invention. | | | | | | | |

**Table 2**

| Component | | Ingredient (amount: pbw) | Comparative Example | | | |
|---|---|---|---|---|---|---|
| | | | 1 | 2 | 3 | 4 |
| (A) | | Methylvinylpolysiloxane (1) | 100 | - | - | - |
| | | Methylvinylpolysiloxane (2) | - | 100 | - | - |
| | | Methylvinylpolysiloxane (3) | - | - | 100 | - |
| | | Methylvinylpolysiloxane (5) | - | - | - | 100 |
| (B) | | Methylhydrogenpolysiloxane (6) | 1.77 | 3.09 | 4.48 | 1.70 |
| | | Methylhydrogenpolysiloxane (7) | - | - | 1.24 | - |
| (C) | | Platinum-vinylsiloxane complex | 2 | 2 | 2 | 2 |
| (D) | | 1-Ethynyl-1-cyclohexanol | 0.27 | 0.3 | 0.25 | 0.3 |
| | | 1,1-Dimethylpropynyloxytrimethylsilane | 0.19 | - | 0.25 | - |
| (E) | | Siloxane mixture (Synthesis Example 1) | - | - | - | 2 |
| (F) | | High-molecular-weight linear organopolysiloxane (8) | - | 1.5 | - | 1.5 |
| | | High-molecular-weight linear organopolysiloxane (9) | - | - | 3.0 | - |

| Physical properties | | | | | | |
|---|---|---|---|---|---|---|
| | H/Vi | | 1.67 | 1.70 | 1.70 | 1.88 |
| | Kinematic viscosity of silicone release composition (mm²/s) | | 405 | 120 | 368 | 685 |

| Release properties | | | | | | |
|---|---|---|---|---|---|---|
| | Release force (N/50 mm) at 0.3 m/min | | 0.51 | 0.44 | 0.38 | 0.27 |
| | Residual adhesion rate (%) | | 92 | 90 | 88 | 92 |
| | Maximum amount of mist generated for 60 sec (mg/m³) | | 152 | 138 | 103 | 83 |
| | Coating | | × | × | × | ○ |
| | Coating weight variation (g/m²) | | 0.21 | 0.15 | 0.16 | 0.13 |

The silicone release compositions of Examples 2 and 3 and Reference Examples 1, 4 and 5, in which organopolysiloxane (E) containing a crosslinked structure and having fluidity (mist suppressant) is added, have a kinematic viscosity of up to 406 mm²/s and a maximum amount of generated mist as low as 40 to 67 mg/m³. By virtue of these properties, in Examples 2 and 3 and Reference Examples 1, 4 and 5, no penetration of the dye solution to the back surface is observed in the coating test and the coating weight variation is as small as 0.09 g/m² or less.

On the contrary, the silicone release compositions of Comparative Examples 1 to 3 in which a mist suppressant is not added have a maximum amount of generated mist as high as 103 to 152 mg/m³. In the release papers using the silicone release compositions of Comparative Examples 1 to 3, the penetration of the dye solution from the front surface to the back surface is observed and the coating weight variation is 0.15 mg/m² or greater, indicating a rough surface.

The silicone release composition of Comparative Example 4 comprising a base oil having a high kinematic viscosity of 600 mm²/s shows a maximum amount of generated mist which is as high as 83 mg/m³ despite addition of a mist suppressant. Although no penetration of the dye solution to the back surface is observed, the coating weight variation is as large as 0.13 mg/m².

## Claims

1. A solventless silicone release composition comprising the following components (A), (B), (C), (E) and (F):
(A) alkenyl-containing organopolysiloxane containing at least two alkenyl groups per molecule and having a vinyl value of 0.016 mol/100 g to 0.7 mol/100 g and a kinematic viscosity at 25°C of 80 mm²/s to 500 mm²/s, when measured by an Ostwald viscometer, represented by the general formula (1)
M_{α}M^{vi}_{β}D_{γ}D^{vi}_{δ}T_{ε}T^{vi}_{ζ}Q_{η} (1)
wherein M is R₃SiO_{1/2}, M^{vi} is R₂PSiO_{1/2}, D is R₂SiO_{2/2}, D^{vi} is RPSiO_{2/2}, T is RSiO_{3/2}, T^{vi} is PSiO_{3/2}, Q is SiO_{4/2}, each R independently is a C₁-C₁₂ substituted or unsubstituted monovalent hydrocarbon group free of aliphatic unsaturation, P is an alkenyl group of the formula -(CH₂)ₐ-CH=CH₂ wherein a is an integer of 0 to 6, α, β, δ and ζ are each independently an integer of at least 0, not all of β, δ and ζ being 0 at the same time, 2 ≤ β+δ+ζ ≤ 50, γ is an integer of 10 to 300, ε is an integer of 0 to 20, and η is an integer of 0 to 10,
(B) organohydrogenpolysiloxane containing at least two silicon-bonded hydrogen atoms per molecule and having a kinematic viscosity at 25°C of 2 mm²/s to 500 mm²/s, when measured by an Ostwald viscometer, in an amount to give 1 to 5 moles of silicon-bonded hydrogen atoms per mole of alkenyl groups in component (A),
(C) an effective amount of platinum group metal base catalyst,
(E) 0.1 to 10 parts by weight, per 100 parts by weight of component (A), of organopolysiloxane containing a crosslinked structure and having fluidity, and
(F) 0.1 to 10 parts by weight per 100 parts by weight of component (A) of a high-molecular-weight linear organopolysiloxane having the general formula (5):
M¹₂D_{Ψ} (5)
wherein M¹ is R¹₃SiO_{1/2}, D is as defined above, R¹ is a C₁-C₁₂ substituted or unsubstituted monovalent hydrocarbon group free of aliphatic unsaturation or a hydroxyl group, and Ψ is a positive number of 300 to 3,000.

2. Solventless silicone release composition of claim 1 further comprising (D) 0.01 to 5 parts by weight per 100 parts by weight of component (A) of an addition reaction inhibitor.

3. Solventless silicone release composition of claim 1 or 2 wherein component (E) is organopolysiloxane comprising the addition reaction product of an organopolysiloxane of structure having the following average compositional formula (2) with an organohydrogenpolysiloxane of structure having the following average compositional formula (3):
M_{θ}M^{vi} 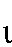 D_{κ}D^{vi}_{λ}T_{µ}T^{vi}_{ν}Q_{ξ} (2)
MₒM^{H}_{π}D_{ρ}D^{H}_{σ}T_{τ}T^{H}_{ϕ}Q_{χ} (3)
wherein M is R₃SiO_{1/2}, M^{vi} is R₂PSiO_{1/2}, M^{H} is R₂HSiO_{1/2}, D is R₂SiO_{2/2}, D^{vi} is RPSiO_{2/2}, D^{H} is RHSiO_{2/2}, T is RSiO_{3/2}, T^{vi} is PSiO_{3/2}, T^{H} is HSiO_{3/2}, Q is SiO_{4/2}, each R independently is a C₁-C₁₂ substituted or unsubstituted monovalent hydrocarbon group free of aliphatic unsaturation, P is an alkenyl group of the formula -(CH₂)ₐ-CH=CH₂ wherein a is an integer of 0 to 6,
θ, 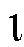 , κ, λ, µ, o, π, ·ρ, σ, and τ are each independently 0 or a positive number, v is 0 or a positive number up to 20, ϕ is 0 or a positive number up to 20, ξ is 0 or a positive number up to 5, χ is 0 or a positive number up to 5, not all of 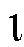 , λ and ν are 0 at the same time, not all of π, σ and ϕ are 0 at the same time, 2 ≤ 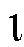 +λ+ν ≤ 100, 2 ≤ π+σ+ϕ ≤ 100, and 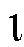 +λ+ν and π+σ+ϕ are not both 2 at the same time.

4. Solventless silicone release composition of claim 1 or 2 wherein component (E) is organopolysiloxane comprising the condensation reaction product of a hydroxyl-containing organopolysiloxane with an alkoxy-containing organopolysiloxane, and containing RSiO_{3/2} units wherein R is C₁-C₁₂ substituted or unsubstituted monovalent hydrocarbon group free of aliphatic unsaturation.

5. Solventless silicone release composition of any one of claims 1 to 4 wherein component (B) is an organohydrogenpolysiloxane having the general formula (4):
M_{o'}M^{H}_{π'}D_{ρ'}D^{H}_{σ},T^{H}_{ϕ'}Q_{χ'} (4)
wherein M is R₃SiO_{1/2}, M^{H} is R₂HSiO_{1/2}, D is R₂SiO_{2/2}, D^{H} is RHSiO_{2/2}, T is RSiO_{3/2}, T^{H} is HSiO_{3/2}, Q is SiO_{4/2}, each R independently is a C₁-C₁₂ substituted or unsubstituted monovalent hydrocarbon group free of aliphatic unsaturation, o', π', ρ' and τ' are each independently an integer of at least 0, σ' is an integer of 0 to 100, ϕ' is an integer of 0 to 10, χ' is an integer of 0 to 10, not all of π', σ' and ϕ' are 0 at the same time, and 2 ≤ π'+σ'+ϕ' ≤ 100.

6. Solventless silicone release composition of any one of claims 1 to 5 which has a kinematic viscosity at 25°C of up to 500 mm²/s.

7. A method for preparing a release sheet comprising the steps of coating a solventless silicone release composition of any one of claims 1 to 6 onto a paper or film substrate by means of a coating roll at a peripheral velocity of at least 250 m/min, and heat curing the composition to form a cured silicone film.

8. A paper substrate release sheet prepared by a method of claim 7, wherein when the release sheet having the cured silicone film is allowed to float on a 5% by weight aqueous solution of brilliant green dye such that one surface of the cured silicone film is immersed in the solution, for 1 minute, and the one surface of the cured silicone film is then washed with water, the cured silicone film shows no penetration of the dye from the surface immersed in the dye solution to the opposite surface.

9. A paper substrate release sheet prepared by a method of claim 7, wherein after the solventless silicone release composition is coated to the paper substrate and cured, the difference between maximum and minimum coating weights is not more than 0.1 g/m² as measured by X-ray fluorescence analysis.

## Patentansprüche

1. Lösungsmittelfreie Silikon-Trennzusammensetzung, welche die folgenden Komponenten (A), (B), (C), (E) und (F) umfasst:
(A) Alkenyl-hältiges Organopolysiloxan, das zumindest zwei Alkenylgruppen pro Molekül enthält und eine Vinylzahl von 0,016 mol/100 g bis 0,7 mol/100 g und eine mittels eines Ostwald-Viskosimeters gemessene kinematische Viskosität bei 25 °C von 80 mm²/s bis 500 mm²/s aufweist und durch die allgemeine Formel (1) dargestellt ist:
M_{α}M^{vi}_{β}D_{γ}D^{vi}_{δ}T_{ε}T^{vi}_{ζ}Q_{η} (1)
worin M R₃SiO_{1/2} ist, M^{vi} R₂PSiO_{1/2} ist, D R₂SiO_{2/2} ist, D^{vi} RPSiO_{2/2} ist, T RSiO_{3/2} ist, T^{vi} PSiO_{3/2} ist, Q SiO_{4/2} ist, die R jeweils unabhängig eine substituierte oder unsubstituierte einwertige C₁₋₁₂-Kohlenwasserstoffgruppe frei von aliphatischen Unsättigungen sind, P eine Alkenylgruppe der Formel -(CH₂)ₐ-CH=CH₂ ist, worin a eine ganze Zahl von 0 bis 6 ist, α, β, δ und ζ jeweils unabhängig eine ganze Zahl von zumindest 0 sind, wobei β, δ und ζ nicht alle gleichzeitig 0 sind, 2 ≤ β + δ + ζ ≤ 50 ist, γ eine ganze Zahl von 10 bis 300 ist, ε eine ganze Zahl von 0 bis 20 ist und η eine ganze Zahl von 0 bis 10 ist;
(B) Organohydrogenpolysiloxan, das zumindest zwei an Silicium gebundene Wasserstoffatome pro Molekül enthält und eine mittels eines Ostwald-Viskosimeters gemessene kinematische Viskosität bei 25 °C von 2 mm²/s bis 500 mm²/s aufweist, in einer solchen Menge, dass 1 bis 5 mol an Silicium gebundene Wasserstoffatome pro Mol Alkenylgruppen in Komponente (A) erhalten werden;
(C) eine wirksame Menge eines Katalysators auf Platingruppenmetall-Basis;
(E) 0,1 bis 10 Gewichtsteile eines Organopolysiloxans, das eine vernetzte Struktur enthält und Fluidität aufweist, pro 100 Gewichtsteile von Komponente (A); und
(F) 0,1 bis 10 Gewichtsteile eines hochmolekularen unverzweigten Organopolysiloxans pro 100 Gewichtsteile von Komponente (A), das die allgemeine Formel (5) aufweist:
M¹₂D_{Ψ} (5)
worin M¹ R¹₃SiO_{1/2} ist, D wie oben definiert ist, R¹ eine substituierte oder unsubstituierte einwertige C₁₋₁₂-Kohlenwasserstoffgruppe frei von aliphatischen Unsättigungen oder eine Hydroxylgruppe ist und Ψ eine positive Zahl von 300 bis 3.000 ist.

2. Lösungsmittelfreie Silikon-Trennzusammensetzung nach Anspruch 1, die weiters (D) 0,01 bis 5 Gewichtsteile eines Additionsreaktions-Inhibitors pro 100 Gewichtsteile von Komponente (A)umfasst.

3. Lösungsmittelfreie Silikon-Trennzusammensetzung nach Anspruch 1 oder 2, wobei Komponente (E) Organopolysiloxan ist, welches ein Additionsreaktionsprodukt eines Organopolysiloxans mit einer Struktur, welche die folgende mittlere Zusammensetzungsformel (2) aufweist, mit einem Organohydrogenpolysiloxan mit einer Struktur, welche die folgende mittlere Zusammensetzungsformel (3) aufweist, umfasst:
M_{θ}M^{vi} 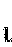 D_{κ}D^{vi}_{λ}T_{µ}T^{vi}_{ν}Q_{ξ} (2)
MₒM^{H}_{π}D_{ρ}D^{H}_{σ}T_{τ}T^{H}_{ϕ}Q_{χ} (3)
worin M R₃SiO_{1/2} ist, M^{vi} R₂PSiO_{1/2} ist, M^{H} R₂HSiO_{1/2} ist, D R₂SiO_{2/2} ist, D^{vi} RPSiO_{2/2} ist, D^{H} RHSiO_{2/2} ist, T RSiO_{3/2} ist, T^{vi} PSiO_{3/2} ist, T^{H} HSiO_{3/2} ist, Q SiO_{4/2} ist, die R jeweils unabhängig eine substituierte oder unsubstituierte einwertige C₁₋₁₂-Kohlenwasserstoffgruppe frei von aliphatischen Unsättigungen sind, P eine Akenylgruppe der Formel -(CH₂)ₐ-CH=CH₂ ist, worin a eine ganze Zahl von 0 bis 6 ist,
θ, 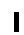 , κ, λ, µ, o, π, ρ, σ und τ jeweils unabhängig 0 oder eine positive Zahl sind, v = 0 oder eine positive Zahl bis höchstens 20 ist, Φ = 0 oder eine positive Zahl bis höchstens 20 ist, ξ = 0 oder eine positive Zahl bis höchstens 5 ist, χ = 0 oder eine positive Zahl bis höchstens 5 ist, wobei 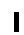 , λ und v nicht alle gleichzeitig 0 sind, π, σ und Φ nicht alle gleichzeitig 0 sind, 2 ≤ 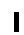 + λ+ v ≤ 100 ist, 2 ≤ π + σ + Φ ≤ 100 ist und 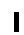 + λ+ v und π + σ + Φ nicht beide gleichzeitig 2 sind.

4. Lösungsmittelfreie Silikon-Trennzusammensetzung nach Anspruch 1 oder 2, wobei Komponente (E) Organopolysiloxan ist, das ein Kondensationsreaktionsprodukt eines Hydroxyl-hältigen Organopolysiloxans mit einem Alkoxy-hältigen Organopolysiloxan umfasst und RSiO_{3/2}-Einheiten enthält, worin R eine substituierte oder unsubstituierte einwertige C₁₋₁₂-Kohlenwassserstoffgruppe frei von aliphatischen Unsättigungen ist.

5. Lösungsmittelfreie Silikon-Trennzusammensetzung nach einem der Ansprüche 1 bis 4, wobei Komponente (B) ein Organohydrogenpolysiloxan ist, das die allgemeine Formel (4) aufweist:
M_{o'}M^{H}_{π'}D_{ρ'}D^{H}_{σ'}T_{τ'}T^{H}_{ϕ'}Q_{χ'} (4)
worin M R₃SiO_{1/2} ist, M^{H} R₂HSiO_{1/2} ist, D R₂HSiO_{2/2} ist, D^{H} RHSiO_{2/2} ist, T RSiO_{3/2} ist, T^{H} HSiO_{3/2} ist, Q SiO_{4/2} ist, die R jeweils unabhängig eine substituierte oder unsubstituierte einwertige C₁₋₁₂-Kohlenwasserstoffgruppe frei von aliphatischen Unsättigungen sind, o', π', ρ' und τ' jeweils unabhängig eine ganze Zahl von zumindest 0 sind, σ' eine ganze Zahl von 0 bis 100 ist, ϕ' eine ganze Zahl von 0 bis 10 ist, χ' eine ganze Zahl von 0 bis 10 ist, π', σ' und Φ' nicht alle gleichzeitig 0 sind und 2 ≤ π' + σ' + Φ' ≤ 100 ist.

6. Lösungsmittelfreie Silikon-Trennzusammensetzung nach einem der Ansprüche 1 bis 5, die eine kinematische Viskosität bei 25 °C von bis zu 500 mm²/s aufweist.

7. Verfahren zur Herstellung einer Trennfolie, das die Schritte des Auftragens einer lösungsmittelfreien Silikon-Trennzusammensetzung nach einem der Ansprüche 1 bis 6 auf ein Papier- oder Foliensubstrat mittels einer Auftragwalze mit einer Umfangsgeschwindigkeit von zumindest 250 m/min und des Wärmehärtens der Zusammensetzung, um einen gehärteten Silikonfilm auszubilden, umfasst.

8. Papiersubstrat-Trennfolie, die durch ein Verfahren nach Anspruch 7 hergestellt ist, wobei, wenn die Trennfolie, die den gehärteten Silikonfilm aufweist, 1 min lang auf einer wässrigen Lösung eines leuchtend grünen Farbstoffs mit 5 Gew.-% treiben gelassen wird, so dass eine Oberfläche des gehärteten Silikonfilms in die Lösung eingetaucht ist, und diese eine Oberfläche des gehärteten Silikonfilms dann mit Wasser gewaschen wird, der gehärtete Silikonfilm kein Durchdringen des Farbstoffs von der in der Farbstoff-Lösung eingetauchten Oberfläche zur gegenüberliegenden Oberfläche zeigt.

9. Papiersubstrat-Trennfolie, die durch ein Verfahren nach Anspruch 7 hergestellt ist, wobei, nachdem die lösungsmittelfreie Silikon-Trennzusammensetzung auf das Papiersubstrat aufgetragen und gehärtet wurde, die durch Röntgenfluoreszenzanalyse gemessene Differenz zwischen dem maximalen und dem minimalen Gewicht des Auftrags nicht mehr als 0,1 g/m² beträgt.

## Revendications

1. Composition anti-adhésive à base de silicone exempte de solvant comprenant les composants (A), (B), (C), (E) et (F) suivants :
(A) un organopolysiloxane contenant un alcényle contenant au moins deux groupes alcényle par molécule et présentant un indice de vinyle de 0,016 mol/100 g à 0,7 mol/100 g et une viscosité cinématique à 25°C de 80 mm²/s à 500 mm²/s, lorsqu'elle est mesurée par un viscosimètre Ostwald,
représenté par la formule générale (1)
M_{α}M^{vi}_{β}D_{γ}D^{vi}_{δ}T_{ε}T^{vi}_{ζ}Q_{η} (1)
dans laquelle M est R₃SiO_{1/2}, M^{vi} est R₂PSiO_{1/2}, D est R₂SiO_{2/2}, D^{vi} est RPSiO _{2/2}, T est RSiO_{3/2}, T^{vi} est PSiO_{3/2}, Q est SiO_{4/2}, chaque R est indépendamment un groupe hydrocarboné monovalent substitué ou non substitué en C₁-C₁₂ exempt d'insaturation aliphatique, P est un groupe alcényle de formule -(CH₂)ₐ-CH=CH₂ dans laquelle a est un nombre entier de 0 à 6, α, β, δ et ζ sont chacun indépendamment un nombre entier d'au moins 0, β, δ et ζ n'étant pas tous égaux à 0 en même temps, 2 ≤ β + δ + ζ ≤ 50, γ est un nombre entier de 10 à 300, ε est un nombre entier de 0 à 20, et η est un nombre entier de 0 à 10,
(B) un organohydrogénopolysiloxane contenant au moins deux atomes d'hydrogène liés au silicium par molécule et présentant une viscosité cinématique à 25°C de 2 mm²/s à 500 mm²/s, mesurée par un viscosimètre d'Ostwald, en une quantité permettant d'obtenir 1 à 5 moles d'atomes d'hydrogène liés au silicium par mole de groupes alcényle dans le composant (A),
(C) une quantité efficace de catalyseur à base de métal du groupe platine,
(E) de 0,1 à 10 parties en poids, pour 100 parties en poids du composant (A), d'organopolysiloxane contenant une structure réticulée et présentant une fluidité, et
(F) de 0,1 à 10 parties en poids, pour 100 parties en poids du composant (A), d'un organopolysiloxane linéaire à haut poids moléculaire présentant la formule générale (5) :
M¹₂D_{Ψ} (5)
dans laquelle M¹ est R¹₃SiO_{1/2}, D est tel que défini ci-dessus, R¹ est un groupe hydrocarboné monovalent substitué ou non substitué en C₁-C₁₂ exempt d'insaturation aliphatique ou d'un groupe hydroxyle, et Ψ est un nombre positif de 300 à 3 000.

2. Composition anti-adhésive à base de silicone exempte de solvant selon la revendication 1, comprenant en outre (D) de 0,01 à 5 parties en poids pour 100 parties en poids du composant (A) d'un inhibiteur de réaction d'addition.

3. Composition anti-adhésive à base de silicone exempte de solvant selon la revendication 1 ou 2, dans laquelle le composant (E) est un organopolysiloxane comprenant le produit de réaction d'addition d'un organopolysiloxane de structure présentant la formule compositionnelle moyenne suivante (2) avec un organohydrogénopolysiloxane de structure présentant la formule compositionnelle moyenne suivante (3) :
M_{θ}M^{vi} 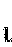 D_{κ}D^{vi}_{λ}T_{µ}T^{vi}_{ν}Q_{ξ} (2)
MₒM^{H}_{π}D_{ρ}D^{H}_{σ}T_{τ}T^{H}_{ϕ}Q_{χ} (3)
dans laquelle M est R₃SiO_{1/2}, M^{vi} est R₂PSiO_{1/2}, M^{H} est R₂HSiO_{1/2}, D est R₂SiO_{2/2}, D^{vi} est RPSiO _{2/2}, D^{H} est RHSiO_{2/2}, T est RSiO_{3/2}, T^{vi} est PSiO_{3/2}, T^{H} est HSiO_{3/2}, Q est SiO_{4/2}, chaque R est indépendamment un groupe hydrocarboné monovalent substitué ou non substitué en C₁-C₁₂ exempt d'insaturation aliphatique, P est un groupe alcényle de formule -(CH₂)ₐ-CH=CH₂ dans laquelle a est un nombre entier de 0 à 6,
θ, *l*, κ, λ, µ, o,π, ρ, σ, et τ sont chacun indépendamment 0 ou un nombre positif, *v* est 0 ou un nombre positif jusqu'à 20, ϕ est 0 ou un nombre positif jusqu'à 20, ξ est 0 ou un nombre positif jusqu'à 5, χ est 0 ou un nombre positif jusqu'à 5, *l*, *λ* et *v* ne sont pas tous 0 en même temps, π, σ a et ϕ ne sont pas tous 0 en même temps, 2 ≤ *l* + *λ* + *v* ≤ 100, 2 ≤ *π* + *σ* + ϕ ≤ 100, et *l* + λ + *v* et *π + σ* + ϕ ne sont pas tous les deux 2 en même temps.

4. Composition anti-adhésive à base de silicone exempte de solvant selon la revendication 1 ou 2, dans laquelle le composant (E) est un organopolysiloxane comprenant le produit de réaction de condensation d'un organopolysiloxane contenant un hydroxyle avec un organopolysiloxane contenant un alcoxy, et contenant des unités RSiO_{3/2} dans lesquelles R est un groupe hydrocarboné monovalent substitué ou non substitué en C₁-C₁₂ exempt d'insaturation aliphatique.

5. Composition anti-adhésive à base de silicone exempte de solvant selon l'une quelconque des revendications 1 à 4, dans laquelle le composant (B) est un organohydrogénopolysiloxane présentant la formule générale (4) :
M_{o'}M^{H}_{π'}D_{ρ'}D^{H}_{σ'}T_{τ'}T^{H}_{ϕ'}Q_{χ'} (4)
dans laquelle M est R₃SiO_{1/2}, M^{H} est R₂HSiO_{1/2}, D est R₂SiO_{2/2}, D^{H} is RHSiO_{2/2}, T est RSiO_{3/2}, T^{H} est HSiO_{3/2}, Q est SiO_{4/2}, chaque R est indépendamment un groupe hydrocarboné monovalent substitué ou non substitué en C₁-C₁₂ exempt d'insaturation aliphatique, o', *π*', ρ' et *τ*' sont chacun indépendamment un entier d'au moins 0, σ' est un entier de 0 à 100, ϕ' est un entier de 0 à 10, χ' est un entier de 0 à 10, tous les *π*', *σ*' et ϕ' ne sont pas 0 en même temps, et
2 ≤ *π'* + σ' + ϕ' ≤ 100.

6. Composition anti-adhésive à base de silicone exempte de solvant selon l'une quelconque des revendications 1 à 5, qui présente une viscosité cinématique à 25°C allant jusqu'à 500 mm²/s.

7. Procédé de préparation d'une feuille anti-adhésive comprenant les étapes d'application en revêtement d'une composition anti-adhésive à base de silicone exempte de solvant selon l'une quelconque des revendications 1 à 6 sur un substrat de papier ou de film au moyen d'un rouleau d'application en revêtement à une vitesse périphérique d'au moins 250 m/min, et de durcissement thermique de la composition pour former un film de silicone durci.

8. Feuille anti-adhésive à substrat de papier préparée par l'intermédiaire d'un procédé selon la revendication 7, dans laquelle lorsque la feuille anti-adhésive présentant le film de silicone durci est autorisée à flotter sur une solution aqueuse à 5 % en poids de colorant vert brillant de sorte qu'une certaine surface du film de silicone durci soit immergée dans la solution, pendant 1 minute, et la première surface du film de silicone durci est ensuite lavée à l'eau, le film de silicone durci ne montre aucune pénétration du colorant à partir de la surface immergée dans la solution de colorant vers la surface opposée.

9. Feuille anti-adhésive à substrat de papier préparée par l'intermédiaire d'un procédé selon la revendication 7, dans laquelle, après que la composition anti-adhésive à base de silicone exempte de solvant ait été appliquée en revêtement sur le substrat de papier et durcie, la différence entre les poids de revêtement maximum et minimum n'est pas supérieure à 0,1 g/m² telle que mesurée par analyse par fluorescence de rayon X.
